# EUROPEAN PATENT APPLICATION

(11) **EP 0 862 291 A2**
(43) Date of publication of application: **02.09.1998**
(21) Application number: 98301463.0
(22) Date of filing: 27.02.1998
(51) Int. Cl.: H04J 14/02

(54) **Wavelength division multiplexing communication system**

(30) Priority: 27.02.1997 JP 44101/97
(71) Applicant: NEC CORPORATION, Tokyo (JP)
(72) Inventor: Mikami, Satoshi, Minato-ku, Tokyo (JP)
(74) Representative: Moir, Michael Christopher

(57) **Abstract**

In an optical transmitter, control signal generators for generating control signals on different frequencies are connected to light sources, respectively, that emit light beams with non-overlapping wavelength bands. The light beams from the light sources are modulated in intensity by the control signals, respectively. Intensity modulated signals are further modulated with input data by optical modulators and are then amplified by optical amplifiers. Amplified optical signals are multiplexed by an optical multiplexer into a multiplexed signal. The multiplexed signal is supplied to a transmission path. In the optical amplifier, a part of a wavelength division multiplexed signal amplified by an optical fiber 33 is branched by an optical branch circuit 36. A branched wavelength division multiplexed signal is converted into an electrical signal by an optical/electrical converter 37. Band-pass filters 38-1 through 38-n extract the control signals from the electrical signal. A counter 39 counts up the number of extracted control signals. An LD drive circuit 40 controls a laser diode 34 to adjust an output level of the signal to have the best value for the number of the optical signals multiplexed on the same fiber, according to the counted value.

## Description

### Background of the Invention:

The present invention relates to a wavelength division multiplexing (WDM) communication system. More particularly, the present invention relates to an output level control technique applicable to control an output level of an optical amplifier that serves as a repeater.

Wavelength division multiplexing communication systems allow simultaneous communication of optical signals on multiple WDM channels. The optical signals are multiplexed on the same fiber with the transmission spectrum divided into a number of non-overlapping wavelength bands. In such WDM communication systems, an optical amplifier (repeater amplifier) is placed on a transmission path between an optical transmitter and an optical receiver to provide long distance communication.

In long distance optical communication systems using an optical amplifier as a repeater, the output level of the optical amplifier should be set at the best value to provide optimum transmission performance, in consideration for a non-linear effect of an optical fiber and optical noise (ASE: amplified spontaneous emission noise) in the optical amplifier. Thus, the optical amplifier for the conventional WDM communication system controls an amplification rate to obtain a wavelength division multiplexed signal (multiplexed optical signals of a predetermined number) with the optimum output power level.

The number of the optical signals multiplexed on the same fiber may be reduced due to a trouble or fault in the optical transmitter. On the contrary, the number of the optical signals multiplexed on the same fiber may be increased as a result of updating of the optical transmitter and the optical receiver for coping with a larger transmission capacity. The output level of the optical amplifier does not change because of the limitation of the amplification rate even though the number of the optical signals on the same fiber varies. A signal level, on the other hand, fluctuates depending on the number of the multiplexed signals.

The conventional optical amplifier can be operated with the best transmission performance during communication with the predetermined number of optical signals. However, the transmission performance will be degraded when the number of optical signals for the communication is different from the predetermined number.

### Summary of the Invention:

Therefore, an object of at least the preferred embodiments of the present invention is to provide a wavelength division multiplexing communication system comprising an optical amplifier of which an output level can be controlled to obtain the best transmission performance.

A wavelength division multiplexing communication system according to the present invention comprises an optical transmitter for use in multiplexing a plurality of optical signals with the transmission spectrum divided into a number of non-overlapping wavelength bands to transmit a multiplexed signal as a wavelength division multiplexed signal, an optical amplifier for repeat amplifying the wavelength division multiplexed signal, means for counting the number of wavelength bands present in the signal, and means for controlling the optical amplifier in response to the counted number of bands.

According to an aspect of the present invention, the optical transmitter comprises an intensity modulating unit for modulating the intensity of the optical signals by means of control signals on different frequencies. The optical amplifier comprises a branch unit for branching a part of the wavelength division multiplexed signal to produce a branched wavelength division multiplexed signal; an optical/electrical converter for converting the branched wavelength division multiplexed signal into an electrical signal to produce a converted electrical signal; a plurality of band-pass filters adapted to pass signals corresponding to the control signals on different frequencies from the converted electrical signal; a counter for counting the number of the signals passed through the band-pass filters to produce a signal indicative of a counted value; and an amplifier for amplifying the wavelength division multiplexed signal according to the counted value in response to the converted electrical signal and the signal indicative of the counted value.

### Brief Description of the Drawings:

Fig. 1 is a block diagram showing configuration of a conventional optical amplifier;

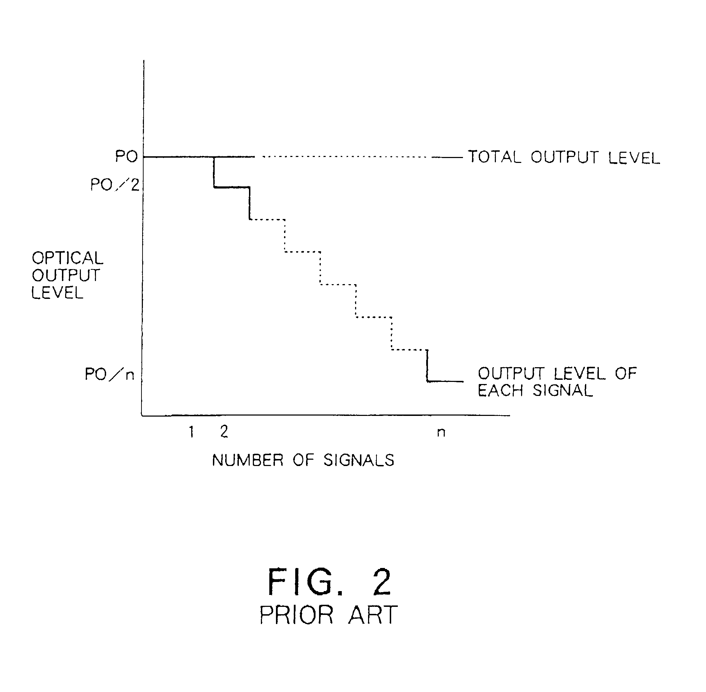

Fig. 2 is a graphic diagram of the number of optical signals as a function of an optical output level in the optical amplifier shown in Fig. 1;
Fig. 3 is a block diagram showing configuration of an optical transmitter implemented in a wavelength division multiplexing communication system according to a preferred embodiment of the present invention;
Fig. 4 is a block diagram showing configuration of an optical amplifier implemented in the wavelength division multiplexing communication system according to the preferred embodiment of the present invention;
Fig. 5 is a graphical diagram of the number of optical signals as a function of an optical output level in the optical amplifier shown in Fig. 4;
Fig. 6 is a block diagram of a modification of the optical transmitter in Fig. 3; and
Fig. 7 is a block diagram of another modification of the optical transmitter in Fig. 3.

### Description of the Preferred Embodiments:

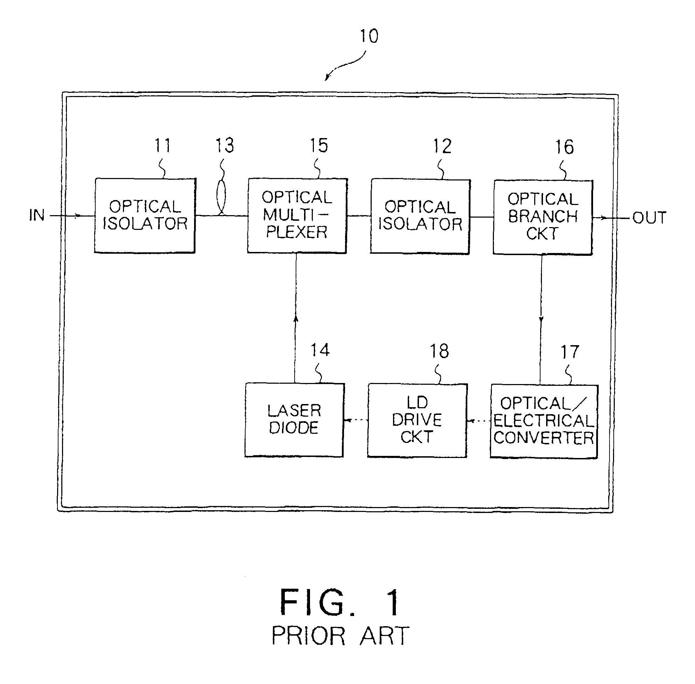

Referring to Fig. 1, a conventional optical amplifier is described that is used in a wavelength division multiplexing communication system, for the purpose of facilitating the understanding of the present invention. In Fig. 1, an optical amplifier 10 comprises optical isolators 11 and 12 for transmitting a light beam in one direction. An optical fiber 13 is for amplifying an optical signal propagating therethrough. A laser diode 14 generates a pumping light for pumping the optical fiber 13. An optical coupler or multiplexer 15 is for guiding the pumping light to the optical fiber 13. An optical branch circuit 16 is for branching a part of an optical signal supplied from the optical isolator 12. An optical/electrical converter 17 converts a branched optical signal from the optical branch circuit 16 into an electrical signal. An LD drive circuit 18 controls driving of the laser diode 14 in accordance with the output of the optical/electrical converter 17. In Fig. 1, a solid line indicates a flow of the optical signal while a broken line indicates a flow of the electrical signal.

A wavelength division multiplexed signal supplied from the optical transmitter (not shown) is transmitted to the optical amplifier 10 through the optical fiber. The wavelength division multiplexed signal directed to the optical amplifier 10 is then incident to the optical fiber 13 through the optical isolator 11. An incident wavelength division multiplexed signal is amplified when propagated through the optical fiber 13. An amplified wavelength division multiplexed signal is transmitted from the optical branch circuit 16 to outside (optical receiver).

The optical branch circuit 16 branches a part of the amplified wavelength division multiplexed signal and leads it to the optical/electrical converter 17. The optical/electrical converter 17 converts the wavelength division multiplexed signal after being branched by the optical branch circuit 16 into an electrical signal and then supplies that electrical signal to the LD drive circuit 18. The LD drive circuit 18 controls the laser diode 14 such that the signal level of the electrical signal from the optical/electrical converter 17 is kept at a predetermined value. In other words, the LD drive circuit 18 controls the laser diode 14 to ensure the output level (intensity) of the wavelength division multiplexed signal to have a predetermined value that is transmitted from the optical amplifier 10. The pumping light from the laser diode 14 is directed to the optical fiber 13 by the wavelength division multiplexer 15. The optical fiber 13 amplifies the wavelength division multiplexed signal to ensure that signal propagating therethrough to have the predetermined value, in response to the intensity of the pumping light from the laser diode 14.

In long distance optical communication systems using the optical amplifier 10 as a repeater, the output level of the optical amplifier 10 should be set at the best value to provide optimum transmission performance, in consideration for a non-linear effect of an optical fiber and optical noise (ASE: amplified spontaneous emission noise) in the optical amplifier 10. Thus, the optical amplifier 10 for the conventional WDM communication system controls an amplification rate to obtain a wavelength division multiplexed signal with the optimum output power level.

The number of the optical signals multiplexed on the same fiber may be reduced due to a trouble or fault in the optical transmitter. On the contrary, the number of the optical signals multiplexed on the same fiber may be increased as a result of updating of the optical transmitter and the optical receiver for coping with a larger transmission capacity. The output level of the optical amplifier 10 no change because of the limitation of the amplification rate even though the number of the optical signals on the same fiber varies. The signal level, on the other hand, fluctuates depending on the number of the multiplexed signals.

For example, it is assumed that the output level of the optical amplifier is set at PO to provide optimum transmission performance for the wavelength division multiplexed signal including n number of optical signals. In such a case, the number of optical signals is n and the output level of each optical signal is represented by P0/n. The output level of the optical signal is equal to P0 when there is only one optical signal.

Thus, the conventional optical amplifier 10 can be operated with the best transmission performance during communication with the predetermined number of optical signals. However, the transmission performance will be degraded when the number of optical signals for the communication is different from the predetermined number.

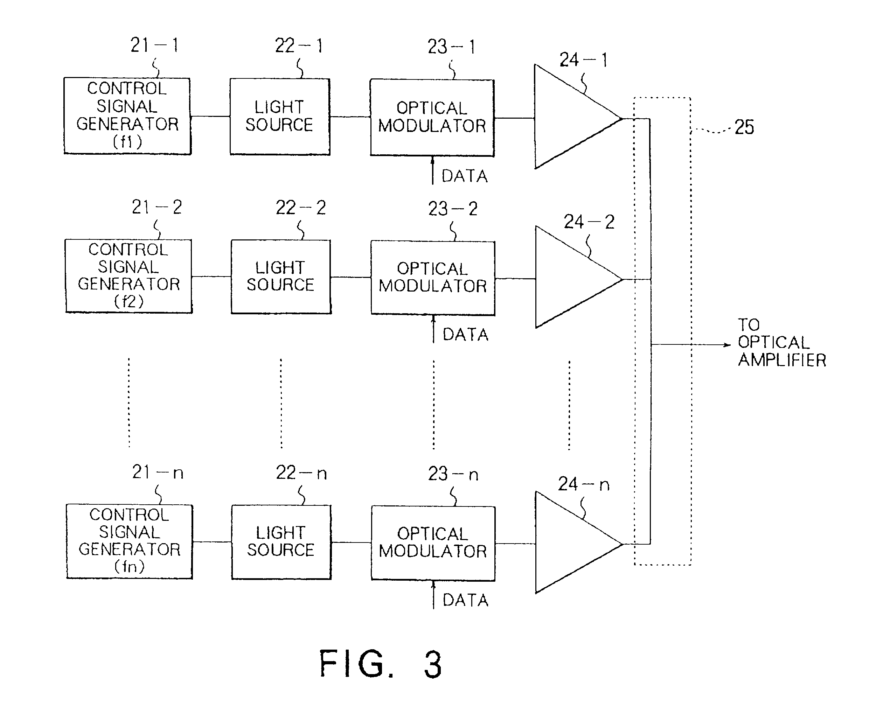

Referring to Fig. 3, an optical transmitter is described that is implemented in a wavelength division multiplexed communication system according to a preferred embodiment of the present invention. The optical transmitter is for producing a wavelength division multiplexed signal on the n number of channels. For this purpose, the optical transmitter comprises n number of control signal generators 21-1 through 21-n, and an n number of light sources 22-1 through 22-n. The control signal generators 21-1 through 21-n are for generating control signals on different frequencies (fl through fn). The light sources 22-1 through 22-n are connected to the control signal generators 21-1 through 21-n, respectively to produce light beams with the spectrum having number of non-overlapping wavelength bands. The light source may be a laser diode. The optical transmitter further comprises n number of optical modulators 23-1 through 23-n, n number of optical amplifiers 24-1 through 24-n, and an optical coupler or multiplexer 25. The optical modulators 23-1 through 23-n are for modulating the light beam from the light sources 22-1 through 22-n, respectively, with input data. The optical amplifiers 24-l through 24-n are for amplifying the outputs of the optical modulators 23-1 through 23-n, respectively. The optical multiplexer 25 is for multiplexing the outputs of the optical amplifiers 24-1 through 24-n.

The control signal generator 21-1 generates a control signal on the frequency fl and supplies that signal to the light source 22-1. The light source 22-1 produces a light beam with a first wavelength band of which intensity is modulated by a received control signal. Likewise, the control signal generator 21-2 generates a control signal on the frequency f2 and supplies that signal to the light source 22-2. The light source 22-2 produces a light beam with a second wavelength band of which intensity is modulated by a received control signal. Each wavelength supports a single communication channel and each signal has an intensity modulated by a different frequency band.

The light beam emitted from the light source 22-1 is then directed to the optical modulator 23-1. The optical modulator 23-1 modulates a received light beam with the input data and supplies a modulation result as an optical signal to the optical amplifier 24-1. The optical amplifier 24-1 amplifies an amplitude of a received optical signal and supplies the amplification result to the optical multiplexer 25. Likewise, a light beam emitted from the light source 22-2 is then directed to the modulator 23-2. The modulator 23-2 modulates a received light beam with the input data and supplies a modulation result as an optical signal to the optical amplifier 24-2. The optical amplifier 24-2 amplifies an amplitude of a received optical signal and supplies an amplification result to the optical multiplexer 25. In this way, the optical multiplexer 25 receives the n number of optical signals from the optical amplifiers 24-1 through 24-n and multiplexes them to send it to a transmission path such as an optical fiber.

The wavelength division multiplexed signal supplied from the optical transmitter in Fig. 3 is further amplified by an optical amplifier during propagation.

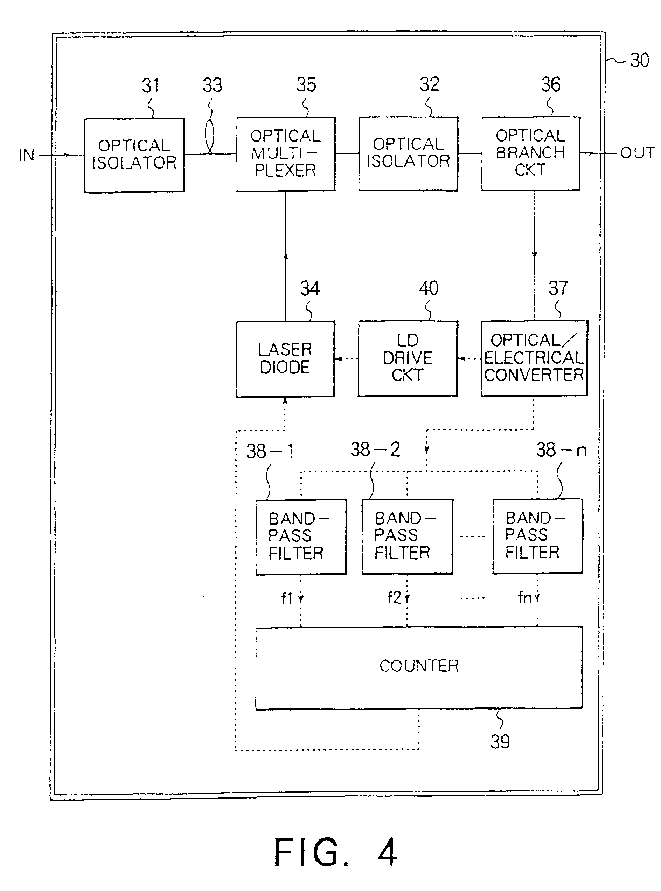

Referring to Fig. 4, an optical amplifier in the wavelength division multiplexing communication system according to the preferred embodiment of the present invention is described. An optical amplifier 30 comprises optical isolators 31 and 32 that pass a light beam in one direction. An optical fiber 33 is for amplifying an optical signal propagating therethrough. A laser diode 34 generates a pumping light for pumping the optical fiber 33. An optical coupler or multiplexer 35 is for guiding the pumping light to the optical fiber 33. An optical branch circuit 36 is for branching a part of an optical signal supplied from the optical isolator 32. An optical/electrical converter 37 converts a branched optical signal from the optical branch circuit 36 into an electrical signal.

The optical amplifier 30 of the present invention has n number of band-pass filters 38-1 through 38-n, a counter 39, and an LD drive circuit 40. The band-pass filters 38-1 through 38-n allow only the signals on frequencies fl through fn, respectively, to pass through it, out of the electrical signals from the optical/electrical converter 37. The counter 39 is for counting the number of the signals passed through the band-pass filters 38-1 through 38-n. The LD drive circuit 40 is for controlling the laser diode 34 according to the outputs of the optical/electrical converter 37 and the counter 39. In Fig. 4, a solid line indicates a flow of the optical signal while a broken line indicates a flow of the electrical signal.

A wavelength division multiplexed signal supplied from the optical transmitter in Fig. 3 is directed to the optical fiber 33 through the optical isolator 31. The optical fiber 33 is pumped by the pumping light from the laser diode 34 and amplifies the optical signal propagating therethrough. The wavelength division multiplexed signal amplified by the optical fiber 33 is supplied to the optical branch circuit 36 through the optical isolator 32. The optical branch circuit 36 branches a part of a received wavelength division multiplexed signal and supplies it to the optical/electrical converter 37. The optical branch circuit 36 supplies the remainder of the signal to the transmission path on an optical receiver side.

The optical/electrical converter 37 converts the wavelength division multiplexed signal branched by the optical branch circuit 36 into an electrical signal. The optical/electrical converter 37 supplies a converted electrical signal to the band-pass filters 38-1 through 38-n and the LD drive circuit 40. The electrical signals from the optical/electrical converters are supplied to all of the band-pass filters 38-1 through 38-n.

The band-pass filters 38-1 through 38-n correspond to the control signal generators 21-1 through 21-n, respectively, in the optical transmitter in Fig. 3. More specifically, the band-pass filters 38-1 through 38-n allow the control signals on the frequencies f1 through fn, respectively, to pass therethrough. Thus, the control signals out of the band-pass filters 38-1 through 38-n indicate the optical signals for which channels are included in the wavelength division multiplexed signal from the optical transmitter.

For example, the control signal on the frequency fl from the band-pass filter 38-1 indicates that the wavelength division multiplexed signal include an optical signal from the light source 21-1. When there is no control signal on the frequency f1, then the wavelength division multiplexed signal does not include an optical signal from the light source 21-1.

The control signals from the band-pass filters 38-1 through 38-n are then supplied to the counter 39. The counter 39 counts up the number of the control signals received thereby. This is equal to counting up the number of the optical signals included in the wavelength division multiplexed signal. The counter 39 supplies a signal indicative of a counted value to the LD drive circuit 40.

The LD drive circuit 40 determines the number of the optical signals in the wavelength division multiplexed signal according to the output signal from the counter 39. The LD drive circuit 40 controls the laser diode 34 to ensure the optical/electrical converter 37 produces the signal with the output level suitable for the number of the optical signals (i.e., to ensure that the wavelength division multiplexed signal is supplied from the optical amplifier 30 at a suitable level).

The laser diode 34 is controlled by the LD drive circuit 40 and generates a pumping light depending on the number of the optical signals multiplexed into the wavelength division multiplexed signal. The pumping light emitted by the laser diode 34 is directed to the optical fiber 33 by the wavelength division multiplexer 35 to pump or excite the optical fiber 33. As a result, the optical fiber 33 can amplify the wavelength division multiplexed signal to ensure the optimum level for the number of optical signals multiplexed into the wavelength division multiplexed signal.

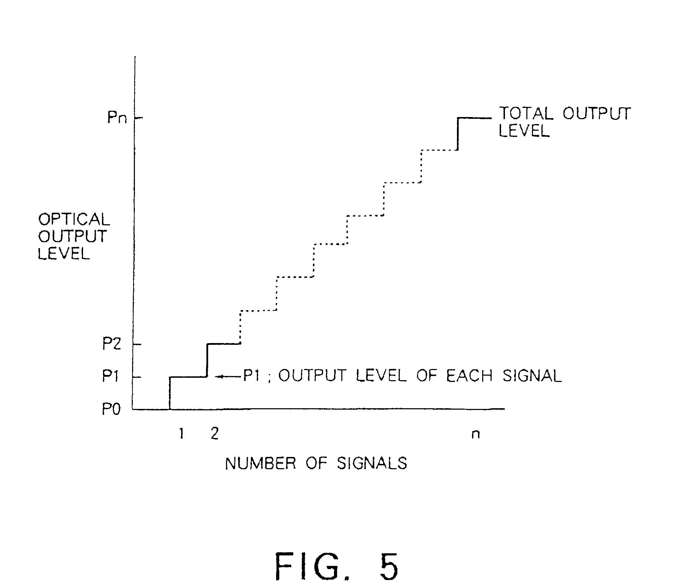

As described above, the optical amplifier 30 in Fig. 4 controls the amplification rate to achieve the optimum output level of the wavelength division multiplexed signal depending on the number of the optical signals in the wavelength division multiplexed signal. A total output level of the wavelength division multiplexed signal varies with the change of the number of the optical signals therein, as shown in Fig. 5. For each optical signal, however, the output level is kept at a certain optimum level independent of the change of the number of the optical signals.

Next, with reference to Figs. 3 through 5, specific examples of the optical transmitter and the optical amplifier are described more in detail. In this example, DFB lasers are used for the light sources 21-1 through 21-n. LN modulators are used for the optical modulators 23-1 through 23-n. An Er doped fiber amplifiers (EDFA) is used for the optical fiber 33. The number of channels in the optical transmitter is four.

The total optical output level of the optical signals is assumed to be +8 dB for the transmission of the signals on the four channels in the optical transmitter. The total output level is also assumed to be +8 dB (+2 dB for one channel) when an attenuated wavelength division multiplexed signal from the four channels is amplified by the optical amplifier.

With the above-mentioned configuration, the optical signals on two channels are disconnected due to, for example, a trouble in the light sources. The conventional optical amplifier amplifies the optical signals such that the total output level of the wavelength division multiplexed signal is equal to +8 dB even though there are only two optical signals remained. Thus, the conventional optical amplifier produces an output of +4 dB for each channel. As a result, transmission of the signal is prevented due to non-linear effect of the optical fiber.

On the contrary, the optical amplifier of the present invention adjusts the output level of the wavelength division multiplexed signal depending on the number of the channels thereon. Accordingly, decrement of the number of the channels from four to two doesn't affect the transmission. The optical amplifier of the present invention controls the total output level of the wavelength division multiplexed signal to be the same as the one during the transmission on the four channels. In other words, the optical amplifier of the present invention controls the total output level of the wavelength division multiplexed signal such that each channel provides +2 dB. The optical amplifier of this example thus controls the wavelength division multiplexed signal to provide it at the total output level of +4 dB.

As described above, in this example, the output level of the optical amplifier can be controlled to be the best value without being affected by the number of the channels.

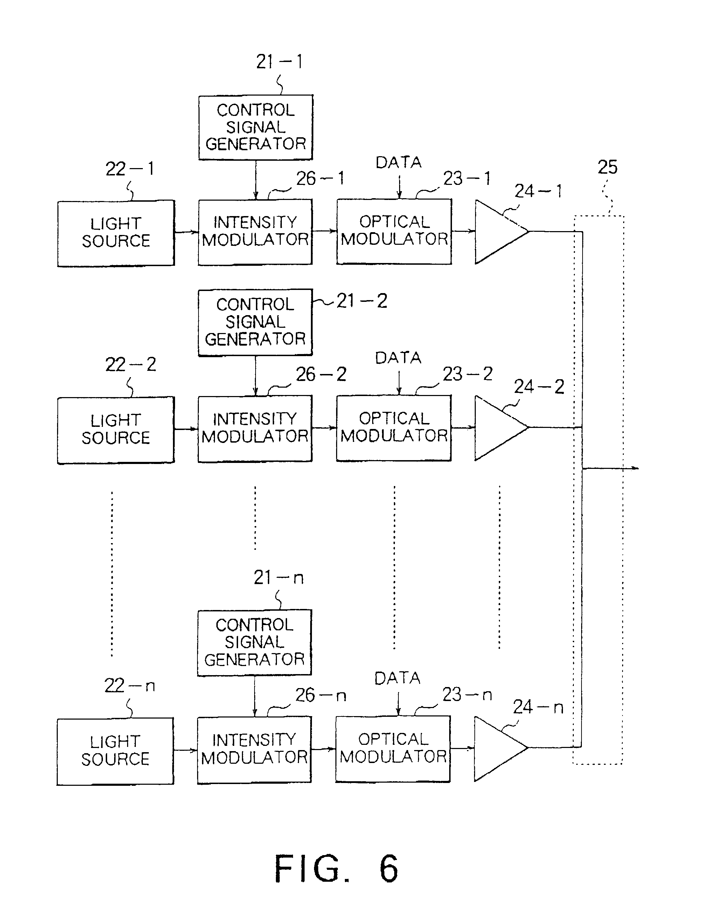

Referring to Fig. 6, a modification of the optical transmitter in Fig. 3 is described. The modification is different from the optical transmitter in Fig. 3 in that intensity modulation units are provided before the optical modulators 23-1 through 23-n. An input of the optical modulator 23-1 is connected to the intensity modulation unit comprising the control signal generator 21-1 and an intensity modulator 26-1. The input of the optical modulator 23-2 is connected to an intensity modulation unit comprising the control signal generator 21-2 and an intensity modulator 26-2. Likewise, the input of the optical modulator 23-n is connected to an intensity modulation unit comprising the control signal generator 21-n and an intensity modulator 26-n.

For the optical modulator 23-1, the intensity modulator 26-1 is connected between the light source 22-1 and the optical modulator 23-1. The intensity modulator 26-1 modulates intensity of the light beam from the light source 22-1 with the control signal on the frequency f1 from the control signal generator 21-1. The intensity modulator 26-1 then supplies an intensity modulated optical signal to the optical modulator 23-1. The optical modulator 23-1 modulates the intensity modulated optical signal with the input data and supplies it as an optical signal to the optical amplifier 24-1. The subsequent operations are similar to those described in conjunction with the optical transmitter in Fig. 3.

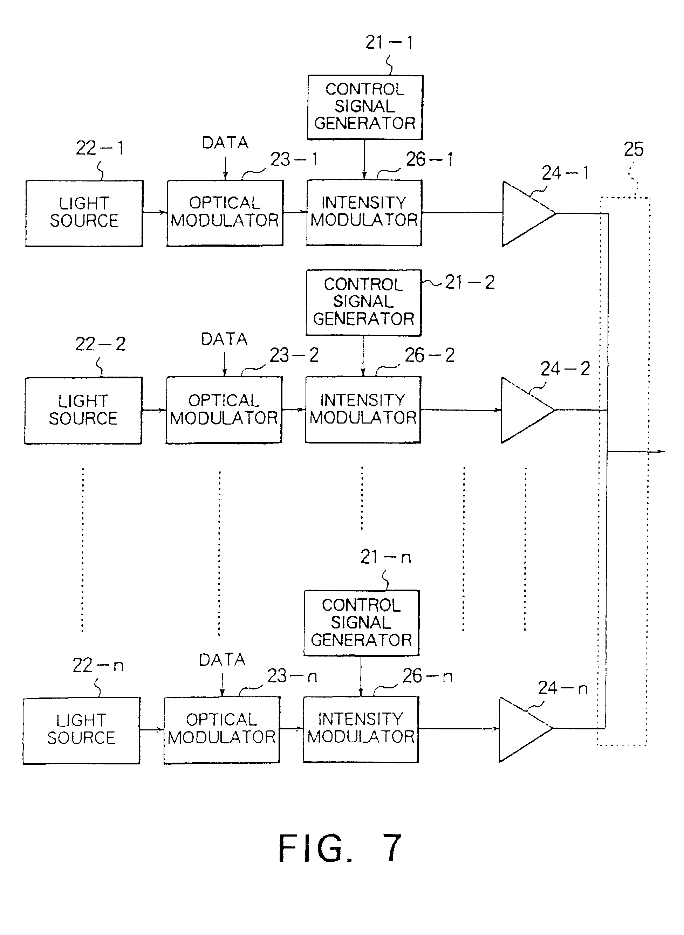

Referring to Fig. 7, another modification of the optical transmitter in Fig. 3 is described. The modification is different from the one in Fig. 6 in that the intensity modulation units are provided after the optical modulators 23-1 through 23-n. The output of the optical modulator 23-1 is connected to an intensity modulation unit comprising the control signal generator 21-1 and the intensity modulator 26-1. The output of the optical modulator 23-2 is connected to an intensity modulation unit comprising the control signal generator 21-2 and the intensity modulator 26-2. Likewise, the output of the optical modulator 23-n is connected to an intensity modulation unit comprising the control signal generator 21-n and the intensity modulator 26-n.

For the optical modulator 23-1, the intensity modulator 26-1 is connected between the optical modulator 23-1 and the optical amplifier 24-1. The intensity modulator 26-1 carries out intensity modulation of the light beam having the frequency fl from the light source 22-1 by the control signal supplied from the control signal generator 21-1 and supplies an intensity modulated optical signal to the optical modulator 23-1. The subsequent operations are similar to those described in conjunction with the optical transmitter in Fig. 3.

In the optical transmitter in both Figs. 6 and 7, the optical modulator 23-1 and the corresponding intensity modulator 26-1 may be achieved by a single optical modulator.

In the embodiment in Fig. 4, the band-pass filters 38-1 through 38-n are provided for the control signal generators 21-1 through 21-n, respectively (one by one), in the optical transmitter 10 in Fig. 3. However, the control signal generator in the optical transmitter and the band-pass filter in the optical amplifier may be provided depending on the channels to be increased, if to increase the channel(s) is considered in a wavelength division multiplexing communication system.

Each feature disclosed in this specification (which term includes the claims) and/or shown in the drawings may be incorporated in the invention independently of other disclosed and/or illustrated features. The description and drawings are by way of example only.

The text of the abstract filed herewith is repeated here as part of the specification.

In an optical transmitter, control signal generators for generating control signals on different frequencies are connected to light sources, respectively, that emit light beams with non-overlapping wavelength bands. The light beams from the light sources are modulated in intensity by the control signals, respectively. Intensity modulated signals are further modulated with input data by optical modulators and are then amplified by optical amplifiers. Amplified optical signals are multiplexed by an optical multiplexer into a multiplexed signal. The multiplexed signal is supplied to a transmission path. In the optical amplifier, a part of a wavelength division multiplexed signal amplified by an optical fiber 33 is branched by an optical branch circuit 36. A branched wavelength division multiplexed signal is converted into an electrical signal by an optical/electrical converter 37. Band-pass filters 38-1 through 38-n extract the control signals from the electrical signal. A counter 39 counts up the number of extracted control signals. An LD drive circuit 40 controls a laser diode 34 to adjust an output level of the signal to have the best value for the number of the optical signals multiplexed on the same fiber, according to the counted value.

## Claims

1. A wavelength division multiplexing communication system comprising an optical transmitter for use in multiplexing a plurality of optical signals with the transmission spectrum divided into a number of non-overlapping wavelength bands to transmit a multiplexed signal as a wavelength division multiplexed signal, an optical amplifier (30) for repeat amplifying the wavelength division multiplexed signal, characterised by means (37,38,39) for counting the number of wavelength bands present in the signal, and means (33,35-40) for controlling the optical amplifier in response to the counted number of bands.

2. A wavelength division multiplexing communication system comprising an optical transmitter for use in multiplexing a plurality of optical signals with the transmission spectrum divided into a plurality of non-overlapping wavelength bands to transmit a multiplexed signal as a wavelength division multiplexed signal; and an optical amplifier (30) for repeat amplifying the wavelength division multiplexed signal, wherein;
said optical transmitter comprises intensity modulating means (21-1 to 21-n) for modulating intensity of the optical signals by means of control signals on different frequencies;
said optical amplifier comprising branching means (36) for branching a part of said wavelength division multiplexed signal to produce a branched wavelength division multiplexed signal; optical/electrical converting means (37) for converting said branched wavelength division multiplexed signal into an electrical signal to produce a converted electrical signal; a plurality of band-pass filters (38-1 to 38-n) adapted to pass signals corresponding to the control signals on different frequencies from said converted electrical signal; counting means (39) for counting the number of the signals passed through said band-pass filters to produce a signal indicative of a counted value; and
amplifying means (33 to 35, 40) for amplifying said wavelength division multiplexed signal according to said counted value in response to said converted electrical signal and the signal indicative of said counted value.

3. A wavelength division multiplexing communication system as claimed in Claim 2, wherein said optical transmitter comprises a plurality of light sources (22-1 to 22-n) for emitting light beams with non-overlapping wavelength bands; a plurality of optical modulators (23-1 to 23-n) for modulating said light beams from the respective light sources with input data to produce it as the optical signal; an optical multiplexer (25) for multiplexing said optical signals supplied from said optical modulators, and wherein a plurality of control signal generators (21-1 to 21-n) are provided, as said intensity modulating means, for supplying the control signals on different frequencies to the light sources to modulate intensity of said light beams from said light sources.

4. A wavelength division multiplexing communication system as claimed in Claim 2, wherein said optical transmitter comprises a plurality of light sources (21-1 to 21-n) for emitting light beams with non-overlapping wavelength bands; a plurality of optical modulators (23-1 to 23-n) for modulating said light beams from the respective light sources with input data to produce it as the optical signal; an optical multiplexer (25) for multiplexing said optical signals supplied from said optical modulators, and wherein a plurality of intensity modulators (26-1 to 26-n) and a plurality of control signal generators (21-1 to 21-n) are provided, as said intensity modulating means, said intensity modulators being provided for modulating intensity of said light beams at an upstream of said optical modulators and said control signal generators being provided for supplying said control signals on different frequencies to said intensity modulators, respectively.

5. A wavelength division multiplexing communication system as claimed in Claim 2,wherein said optical transmitter comprises a plurality of light sources (22-1 to 22-n) for emitting light beams with non-overlapping wavelength bands; a plurality of optical modulators (26-1 to 26-n) for modulating said light beams from the respective light sources with input data to produce it as said optical signals; an optical multiplexer (25) for multiplexing said optical signals supplied from said optical modulators, and wherein a plurality of intensity modulators (26-1 to 26-n) and a plurality of control signal generators (21-1 to 21-n) are provided, as said intensity modulating means, said intensity modulators being provided for modulating intensity of said light beams at a downstream of said optical modulators and said control signal generators being provided for supplying said control signals on different frequencies to said intensity modulators, respectively.
